# EUROPEAN PATENT APPLICATION

(11) **EP 4 686 623 A1**
(43) Date of publication of application: **04.02.2026**
(21) Application number: 24191460.5
(22) Date of filing: 29.07.2024
(51) Int. Cl.: B60T 7/20, B60T 8/17, B60T 8/172, B60T 8/18

(54) **A CONTROL UNIT AND A METHOD FOR DETERMINING THE NUMBER OF TRAILERS IN A TRACTOR-TRAILER COMBINATION BASED ON POWER CONSUMPTION**

(71) Applicant: VOLVO TRUCK CORPORATION, 405 08 Göteborg (SE)
(72) Inventor: EINSTOSS, Gabriel, Greensboro, 27406 (US); CORREA FIELD MORALES, Alejandro, Greensboro, 27407 (US)
(74) Representative: Zacco Sweden AB

(57) **Abstract**

A control unit (121) for determining the number of trailers towed by a tractor unit (100) in a tractor-trailer arrangement, wherein each trailer in the tractor-trailer arrangement comprises reference electrical loads that are controlled by the control unit and powered by a power supply (110) in the tractor unit, and where the control unit is configured to: activate one or more reference electrical loads in each trailer, whereby the activated reference electrical loads in each trailer has a known expected power consumption, contributing to a total expected power consumption that scales proportionally with the number of trailers; obtain power consumption data pertaining to the one or more reference electrical loads; and determine the number of trailers by analyzing the obtained power consumption data against the known expected power consumption of a single trailer.

## Description

### TECHNICAL FIELD

The disclosure relates generally to road train and long combination vehicles. In particular aspects, the disclosure relates to a control unit and a method for determining the number of trailers in a tractor-trailer combination based on power consumption. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

In the heavy trucking industry, it is common for vehicles to run multiple trailers to increase load capacity and operational efficiency. The addition of multiple trailers significantly alters the vehicle dynamics, particularly impacting maneuverability and the braking system. Traditional braking controllers are typically not configured to automatically adapt to the number of trailers in a tractor-trailer combination and may require manual adjustments of the number of trailers being towed. This manual adjustment process is not only time-consuming but also prone to errors, potentially compromising the braking efficiency and overall control of the vehicle.

Given these limitations, there is a need to develop improved control units and methods for managing vehicles with multiple trailers that do not require manual intervention from the driver.

### SUMMARY

According to a first aspect of the disclosure, a control unit for determining the number of trailers towed by a tractor unit in a tractor-trailer arrangement is disclosed. Each trailer in the tractor-trailer arrangement comprises reference electrical loads that are controlled by the control unit and powered by a power supply in the tractor unit. The control unit is configured to: activate one or more reference electrical loads in each trailer, whereby the one or more activated reference electrical loads in each trailer have a known expected power consumption, contributing to a total expected power consumption that scales proportionally with the number of trailers; obtain power consumption data pertaining to the one or more reference electrical loads; and determine the number of trailers by analyzing the obtained power consumption data against the known expected power consumption of a single trailer. The first aspect of the disclosure may seek to automatically determine the number of trailers in a tractor-trailer combination. A technical benefit may include eliminating the need for the driver to manually adjust for the number of trailers.

Optionally in some examples, including in at least one preferred example, the one or more reference electrical loads activated in each trailer comprise any combination of indicator lights, fog lights, position lights, brake lights, and/or reversing lights. A technical benefit of using one or more of these reference electrical loads may include that expected power consumption is predictable and stable.

Optionally in some examples, including in at least one preferred example, the obtained power consumption data comprise power consumption measurements obtained over a period of time. A technical benefit may include improved reliability in determining the number of trailers.

Optionally in some examples, including in at least one preferred example, activating one or more reference electrical loads in each trailer comprises activating and deactivating according to a known pattern or frequency, thereby enabling removal of power consumption from unrelated electrical loads in the obtained power consumption data. A technical benefit may include improved reliability as power consumption from unrelated electrical loads in the power consumption data can be removed.

Optionally in some examples, including in at least one preferred example, analyzing the obtained power consumption data against the known expected power consumption of a single trailer comprises applying a machine learning model that has been trained on detecting trailers from a dataset of labelled power consumption data, wherein the labels comprise number of trailers and information on activated reference electrical loads and their expected power consumption. A technical benefit may include enhanced accuracy in determining the number of trailers as machine learning models trained from a dataset of labeled power consumption data can improve the control unit's ability to detect and correctly classify trailers.

Optionally in some examples, including in at least one preferred example, the one or more reference electrical load is an anti-lock braking system (ABS) electronic control unit (ECU) having a known expected power consumption, and wherein the control unit is configured to determine the number of trailers equipped with an ABS ECU. A technical benefit may include the ability to also determine the number of trailers equipped with an ABS ECU.

Optionally in some examples, including in at least one preferred example, the control unit is further configured to adjust braking system controller based on the determined number of trailers, such that a braking controller duty cycle is adjusted to account for the number of trailers. A technical benefit may include improved braking performance of the tractor-trailer combination.

Optionally in some examples, including in at least one preferred example, the control unit is further configured to select an operational design domain based on the determined number of trailers. A technical benefit may include improved safety as speed limit and various safety margins may be adjusted to account for the determined number of trailers.

Optionally in some examples, including in at least one preferred example, the power consumption data are obtained from voltage readings taken by a voltage sensor 122A and current readings taken by a current sensor 122B.

According to a second aspect of the disclosure, a tractor unit for towing multiple trailers in a tractor-trailer arrangement is disclosed. The tractor unit comprises a power supply configured to power one or more reference electrical loads in the trailers, a voltage sensor configured to obtain voltage readings and a current sensor configured to obtain current readings, and a control unit according to any of example mentioned herein. The second aspect of the disclosure may seek to automatically determine the number of trailers in a tractor-trailer combination. A technical benefit may include eliminating the need for the driver to manually adjust for the number of trailers.

According to a third aspect of the disclosure, a method for determining the number of trailers towed by a tractor unit is a tractor-trailer combination is disclosed. The method comprises activating one or more reference electrical loads in each trailer, whereby the one or more activated reference electrical loads in each trailer have a known expected power consumption, contributing to a total expected power consumption that scales proportionally with the number of trailers. The method also comprises obtaining power consumption data pertaining to the one or more reference electrical loads. Lastly, the method comprises determining the number of trailers by analyzing the obtained power consumption data against the known expected power consumption of a single trailer. The third aspect of the disclosure may seek to automatically determine the number of trailers in a tractor-trailer combination. A technical benefit may include eliminating the need for the driver to manually adjust for the number of trailers.

Optionally in some examples, including in at least one preferred example, activating one or more reference electrical loads comprises activating any combination of indicator lights, fog lights, position lights, brake lights, and/or reversing lights. A technical benefit of using one or more of these reference electrical loads may include that expected power consumption is predictable and stable.

Optionally in some examples, including in at least one preferred example, the obtained power consumption data comprise power consumption data obtained over a period of time. A technical benefit may include improved reliability in determining the number of trailers.

Optionally in some examples, including in at least one preferred example, activating one or more reference electrical loads in each trailer comprises activating and deactivating according to a known pattern or frequency, thereby enabling power consumption from unrelated electrical loads to be removed in the obtained power consumption data. A technical benefit may include improved reliability as power consumption from unrelated electrical loads in the power consumption data can be removed.

Optionally in some examples, including in at least one preferred example, determining comprises applying a machine learning model that has been trained on detecting trailers from a dataset of labelled power consumption data, wherein the labels comprise number of trailers and information on activated reference electrical loads and their expected power consumption. A technical benefit may include enhanced accuracy in determining the number of trailers as machine learning models trained from a dataset of labeled power consumption data can improve the control unit's ability to detect and correctly classify trailers.

Optionally in some examples, including in at least one preferred example, the one or more reference electrical load is an anti-lock braking system (ABS) electronic control unit (ECU) having a known expected power consumption, and wherein the control unit is configured to determine the number of trailers equipped with an ABS ECU. A technical benefit may include the ability to also determine the number of trailers equipped with an ABS ECU.

Optionally in some examples, including in at least one preferred example, adjusting comprises adjusting a braking controller duty cycle based on the determined number of trailers. A technical benefit may include improved braking performance of the tractor-trailer combination.

Optionally in some examples, including in at least one preferred example, the control unit is further configured to select an operational design domain based on the determined number of trailers. A technical benefit may include improved safety as speed limit and various safety margins may be adjusted to account for the determined number of trailers.

Optionally in some examples, including in at least one preferred example, the power consumption data are obtained from voltage readings taken by a voltage sensor 122A and current readings taken by a current sensor 122B.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings.
FIG. 1 is a schematic diagram of a tractor unit comprising a control unit configured to determine the number of trailers towed by the tractor unit in a tractor-trailer combination.
FIG. 2 shows an example of a tractor-trailer combination with three trailers.
FIG. 3 is a flow chart of a method for determining the number of trailers towed by a tractor unit in a tractor-trailer combination.
FIG. 4A schematically illustrates a control unit.
FIG. 4B shows an example of a computer program product.
FIG. 5 is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

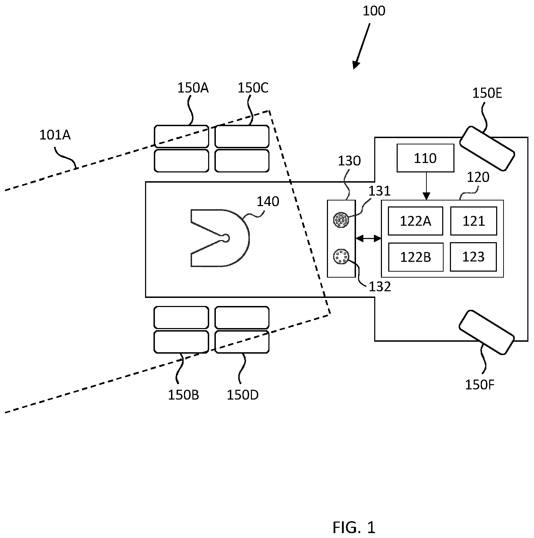

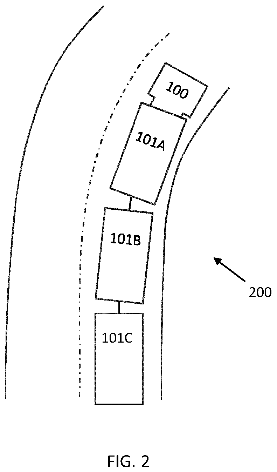

Figs. 1-2 illustrate a first aspect of the disclosure relating to a control unit 121 for determining the number of trailers towed by a tractor unit 100 in a tractor-trailer combination 200. Throughout this text, the term tractor-trailer combination will refer to configurations that allow for multiple trailers, commonly known as road trains or long combination vehicles. The tractor unit 100 typically comprises driven wheels 150A, 150B, 150C, 150D on one or more rear axles and a set of steerable non-driven wheels 150E, 150F on a front axle. The tractor unit 100 may also comprise a fifth wheel hitch to connect to a first trailer 101A. The control unit is configured to obtain power consumption data pertaining to the one or more reference electrical loads, which are typically obtained by multiplying voltage readings taken by a voltage sensor 122A with current readings taken by a current sensor 122B.

Each trailer 101A, 101B, 101C in the tractor-trailer arrangement 200 comprises reference electrical loads that are controlled by the control unit 121 and powered by a power supply 110 of the tractor unit 100. In one example, the power supply may be comprised of a battery and a generator in the tractor unit. The power supply 110 will typically supply power to a low-voltage electrical system 120 of the tractor unit, which can also include any low-voltage electrical loads in the tractor-trailer combination 200. The electrical loads of the trailers are connected to the power supply through standardized trailer connectors 131, 132, that may typically be mounted on a panel 130 on the exterior of the tractor cab. The control unit 121 is configured to activate one or more reference electrical loads in each trailer 101A, 101B, 101C, whereby the activated reference electrical loads in each trailer has a known expected power consumption. This contributes to a total expected power consumption that scales proportionally with the number of trailers. The one or more reference electrical loads may be any electrical load in the trailers that has a known expected power consumption.

Typically, the control unit 121 will activate the same reference electrical loads in all trailers and hence the expected power consumption of the activated reference loads in one trailer will be a multiple of the expected power consumption of the activated reference loads in all trailers. In one example, the reference electrical loads activated in each trailer comprise any combination of indicator lights, fog lights, position lights, brake lights, and/or reversing lights.

The control unit 121 is configured to obtain power consumption data pertaining to the one or more reference electrical loads. The power consumption data is typically obtained from voltage readings taken by a voltage sensor 122A and current readings taken by a current sensor 122B, wherein the power consumption data is obtained by multiplying the voltage readings and the current readings. The power consumption data may comprise power consumption data obtained over a period of time. The power consumption data preferably isolates the power consumption of the reference electrical loads of the trailers but can also be power consumption data of all electrical loads in the tractor-trailer combination 200.

In one example, activating one or more reference electrical loads in each trailer 101A, 101B, 101C by the control unit 121 comprises activating and deactivating according to a known pattern or frequency over a period of time. An advantage of this approach is that it enables removal of power consumption from unrelated electrical loads in the obtained power consumption data. For example, by tracking the obtained power consumption data during periods when the trailer's electrical loads are intentionally activated and deactivated, the control unit may remove power consumption from unrelated electrical loads such as climate control system, dashboard displays, radio and GPS navigation units, etc., from the obtained power consumption data.

The control unit 121 is configured to determine the number of trailers by analyzing the obtained power consumption data against the known expected power consumption of a single trailer. This may be implemented in a number of ways. In one example, the control unit may apply decision regions, which are defined based on the known expected power consumption of a single trailer and the fact that the total expected power consumption scales proportionally with the number of trailers. For example, the total expected power consumption of two trailers is double that of a single trailer, while three trailers triple the total expected power consumption of a single trailer, and so forth. In another example, decision regions can be adjusted to account for unrelated electrical loads by analyzing power consumption data during periods when the reference electrical loads are intentionally activated and deactivated. The unrelated electrical loads may then be removed from the obtained power consumption data. This process is straightforward, as the power consumption of unrelated electrical loads can be estimated by tracking the obtained power consumption data when the reference electrical loads are deactivated.

In another example, the control unit may employ a machine learning model that has been trained on detecting trailers from a dataset of labelled power consumption data, wherein the labeled power consumption data comprise the number of trailers and information on activated reference electrical loads in each trailer 101A, 101B, 101C and their associated known expected power consumption. The underlying technology for the machine learning model generally involves neural networks, particularly convolutional neural networks (CNNs), which have proven highly effective at processing labelled data and are well-suited for tasks involving recognition and classification.

The control unit may also be configured to determine the number of trailers with an anti-lock braking system (ABS) electronic control unit (ECU). The ABS ECU is another electrical load of the trailers that may be used as reference electrical load. Each ABS ECU has an expected power consumption, and thus the same principles as described in the examples above may also be configured to determine the number of trailers equipped with an ABS ECU. The key distinction in this example is that the control unit will not determine the number of trailers, but specifically the number of trailers equipped with an ABS ECU.

The control unit 121 may further be configured to adjust a braking system controller 123 based on the determined number of trailers. In one example, the braking controller duty cycle is adjusted to account for the number of trailers. For example, the ABS pulsing strategy might be adjusted to increase the duty cycle in response to a higher number of trailers. The duty cycle refers to the proportion of time the braking controller activates the trailer braking control line versus it being inactive during a braking event. This modification ensures that sufficient braking pressure is applied to manage the increased mass and momentum of additional trailers. The control unit 121 may also be configured to adjust the braking system controller 123 based on the determined number of trailers and the number of trailers equipped with ABS ECU.

The control unit 121 may be further configured to select an operational design domain (ODD) based on the determined number of trailers. Typically, the control unit includes a memory configured to store multiple ODDs, where the ODDs have been defined to account for the number of trailers in the tractor-trailer combination 200. Each stored ODD is designed with safety margins tailored to specific vehicle configurations and operational conditions. This selection enables the vehicle to operate within an ODD that best suits its current configuration, enhancing safety and performance under varying conditions. A technical benefit of this system is that it allows the vehicle to optimize its operational parameters for different tractor-trailer combinations, thus improving overall efficiency and safety.

Figs. 1-2 also illustrate a second aspect of the disclosure, relating to a tractor unit 100 for towing multiple trailers in a tractor-trailer combination 200. The tractor unit 100 will typically comprise driven wheels 150A, 150B, 150C, 150D on one or more rear axles and a set of steerable non-driven wheels 150E, 150F on a front axle. The tractor unit 100 may also comprise a fifth wheel hitch to connect to a first trailer 101A. The tractor unit comprises a voltage sensor 122A and a current sensor 122B configured to obtain voltage and current readings. The tractor unit 100 further comprises a control unit 121 configured to determine the number of trailers towed by the tractor unit 100, wherein the control unit 121 is configured to operate according to any of the examples mentioned for the first aspect of the disclosure.

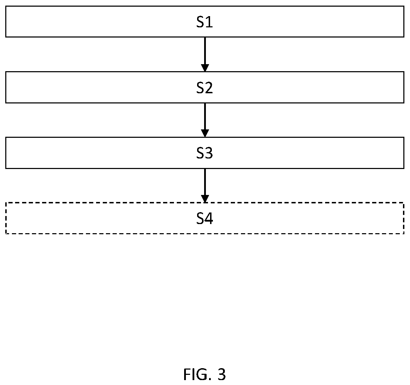

Fig. 3 illustrates a third aspect of the disclosure, relating to a method for determining the number of trailers towed by a tractor unit 100 in a tractor-trailer combination 200. The method comprises the steps of activating S1, obtaining S2 and determining S3. The method may further comprise the step of adjusting S4. It should be noted that any of the aforementioned aspects relating to the control unit 121 and the tractor unit 100 are also applicable to the method.

The step of activating S1 comprises activating one or more reference electrical loads in each trailer 101A, 101B, 101C, whereby the activated reference electrical loads in each trailer have a known expected power consumption. This contributes to a total expected power consumption that scales proportionally with the number of trailers. Typically, activating S1 will involve activating the same reference electrical loads in all trailers and hence the expected power consumption of the activated loads in one trailer will be a multiple of the expected power consumption of the activated loads in all trailers. In one example, the reference electrical loads activated in each trailer comprise indicator lights, fog lights, position lights, brake lights, and/or reversing lights.

In one example, activating S3 one or more reference electrical loads in each trailer 101A, 101B, 101C comprises activating and deactivating according to a known pattern or frequency. An advantage of this approach is that removing power consumption from unrelated electrical loads in the obtained power consumption data is possible. For example, by comparing power consumption data during periods when the trailer's reference electrical loads are intentionally activated and deactivated, power consumption from unrelated electrical loads such as climate control system, dashboard displays, radio and GPS navigation units, etc, can be eliminated or compensated for.

The step of obtaining S2 comprises obtaining power consumption data. The power consumption data is typically obtained from voltage readings taken by a voltage sensor 122A and current readings taken by a current sensor 122B, wherein obtaining the power consumption data is achieved by multiplying the voltage readings and the current readings. In one example, the power consumption data may comprise power consumption data obtained over a period of time. The power consumption data preferably isolates the power consumption of the trailers but can also be power consumption data of all electrical loads in the tractor-trailer combination 200.

The step of determining S3 comprises determining the number of trailers by analyzing the obtained power consumption data against the known expected power consumption of a single trailer. This will typically involve defining decision regions for the number of trailers based on the known expected power consumption of a single trailer and the fact that the total expected power consumption will scale proportionally with the number of trailers. For example, the total expected power consumption of two trailers is double that of a single trailer, while three trailers triple the total expected power consumption of a single trailer, and so forth. In another example, decision regions can be adjusted to account for power consumption of unrelated electrical loads by comparing power consumption data during periods when the reference electrical loads are intentionally activated and deactivated. The power consumption of the unrelated electrical loads may alternatively be subtracted from the power consumption data.

In another example, the determining S3 may involve employing a machine learning model that has been trained on detecting trailers from a dataset of labelled power consumption data, wherein the labeled power consumption data comprise the number of trailers and information on activated reference electrical loads in each trailer 101A, 101B, 101C and their associated known expected power consumption. The underlying technology for the machine learning model generally involves neural networks, particularly convolutional neural networks (CNNs), which have proven highly effective at processing labelled data and are well-suited for tasks involving recognition and classification.

In another example, determining may also involve determining the number of trailers equipped with an ABS ECU. The ABS ECU is another electrical load that may be used as reference electrical load. Each ABS ECU has an expected power consumption, and thus the same method as described above can be used to determine the number of trailers equipped with an ABS ECU. The key distinction in this example is that the method will not determine the number of trailers, but specifically the number of trailers equipped with an ABS ECU.

The step of adjusting S4 may comprise adjusting a braking controller duty cycle based on the determined number of trailers. For example, the ABS pulsing strategy might be adjusted to increase the duty cycle in response to a higher number of trailers. The duty cycle refers to the proportion of time the braking controller activates the trailer braking control line versus it being inactive. This modification ensures that sufficient braking pressure is applied to manage the increased mass and momentum of additional trailers. The step of adjusting S4 may also comprise adjusting a braking controller duty cycle based on the determined number of trailers and the determined number of trailers equipped with ABS ECU.

In another example, the step of adjusting S4 comprises selecting an operational design domain (ODD) based on the determined number of trailers. This involves selecting an ODD from multiple stored ODDs, where the ODDs have been defined to account for the number of trailers in the tractor-trailer combination 200. Each stored ODD is designed with safety margins tailored to the specific vehicle configurations and operational conditions. This selection enables the vehicle to operate within an ODD that best suits its current configuration, enhancing safety and performance under varying conditions.

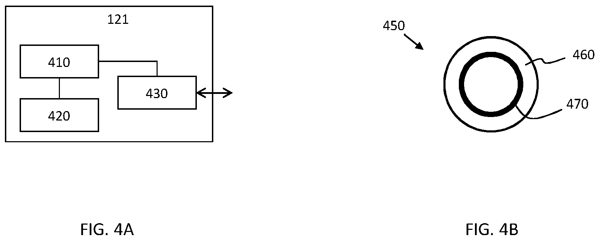

FIG. 4A schematically illustrates, in terms of a number of functional units, the components of a control unit 121 according to aspects of the discussions and methods disclosed herein. This control unit 121 may typically be comprised in the vehicle 100. Processing circuitry 410 is provided using any combination of one or more of a suitable central processing unit CPU, multiprocessor, microcontroller, digital signal processor DSP, etc., capable of executing software instructions stored in a computer program product, e.g., in the form of a storage medium 420. The processing circuitry 410 may further be provided as at least one application specific integrated circuit ASIC, or field programmable gate array FPGA.

Particularly, the processing circuitry 410 is configured to cause the control unit 122 to perform a set of operations, or steps, such as the methods discussed in connection to FIG. 3. For example, the storage medium 420 may store the set of operations, and the processing circuitry 410 may be configured to retrieve the set of operations from the storage medium 420 to cause the control unit 121 to perform the set of operations. The set of operations may be provided as a set of executable instructions. Thus, the processing circuitry 510 is thereby arranged to execute methods as herein disclosed.

The storage medium 420 may also comprise persistent storage, which, for example, can be any single one or combination of magnetic memory, optical memory, solid state memory or even remotely mounted memory.

The control unit 121 may further comprise an interface 430 for communications with at least one external device such as a voltage sensor, a current sensor and a brake controller. As such the interface 430 may comprise one or more transmitters and receivers, comprising analogue and digital components and a suitable number of ports for wireline or wireless communication.

The processing circuitry 410 controls the general operation of the control unit 121, e.g., by sending data and control signals to the interface 430 and the storage medium 420, by receiving data and reports from the interface 430, and by retrieving data and instructions from the storage medium 420. Other components, as well as the related functionality, of the control node are omitted in order not to obscure the concepts presented herein.

FIG. 4B shows an example of a computer program product. A computer readable medium 460 carrying a computer program 470 comprising program code means for performing the steps of aforementioned method when said program product is run on a computer or on processing circuitry 410 of a control unit 122.

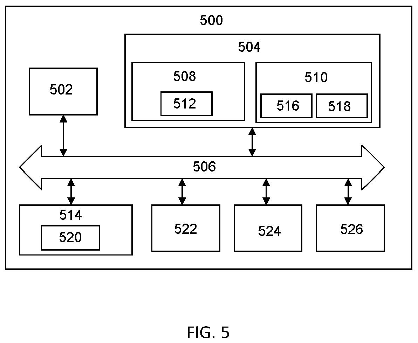

FIG. 5 is a schematic diagram of a computer system 500 for implementing examples disclosed herein. The computer system 500 is adapted to execute instructions from a computer-readable medium to perform these and/or any of the functions or processing described herein. The computer system 500 may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system 500 may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system 500 may comprise at least one computing device or electronic device capable of including firmware, hardware, and/or executing software instructions to implement the functionality described herein. The computer system 500 may include processing circuitry 502 (e.g., processing circuitry including one or more processor devices or control units), a memory 504, and a system bus 506. The computer system 500 may include at least one computing device having the processing circuitry 502. The system bus 506 provides an interface for system components including, but not limited to, the memory 504 and the processing circuitry 502. The processing circuitry 502 may include any number of hardware components for conducting data or signal processing or for executing computer code stored in memory 504. The processing circuitry 502 may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry 502 may further include computer executable code that controls operation of the programmable device.

The system bus 506 may be any of several types of bus structures that may further interconnect to a memory bus (with or without a memory controller), a peripheral bus, and/or a local bus using any of a variety of bus architectures. The memory 504 may be one or more devices for storing data and/or computer code for completing or facilitating methods described herein. The memory 504 may include database components, object code components, script components, or other types of information structure for supporting the various activities herein. Any distributed or local memory device may be utilized with the systems and methods of this description. The memory 504 may be communicably connected to the processing circuitry 502 (e.g., via a circuit or any other wired, wireless, or network connection) and may include computer code for executing one or more processes described herein. The memory 504 may include non-volatile memory 508 (e.g., read-only memory (ROM), erasable programmable read-only memory (EPROM), electrically erasable programmable read-only memory (EEPROM), etc.), and volatile memory 510 (e.g., random-access memory (RAM)), or any other medium which can be used to carry or store desired program code in the form of machine-executable instructions or data structures and which can be accessed by a computer or other machine with processing circuitry 502. A basic input/output system (BIOS) 512 may be stored in the non-volatile memory 508 and can include the basic routines that help to transfer information between elements within the computer system 500.

The computer system 500 may further include or be coupled to a non-transitory computer-readable storage medium such as the storage device 514, which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device 514 and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device 514 and/or in the volatile memory 510, which may include an operating system 516 and/or one or more program modules 518. All or a portion of the examples disclosed herein may be implemented as a computer program 520 stored on a transitory or non-transitory computer-usable or computer-readable storage medium (e.g., single medium or multiple media), such as the storage device 514, which includes complex programming instructions (e.g., complex computer-readable program code) to cause the processing circuitry 502 to carry out actions described herein. Thus, the computer-readable program code of the computer program 520 can comprise software instructions for implementing the functionality of the examples described herein when executed by the processing circuitry 502. In some examples, the storage device 514 may be a computer program product (e.g., readable storage medium) storing the computer program 520 thereon, where at least a portion of a computer program 520 may be loadable (e.g., into a processor) for implementing the functionality of the examples described herein when executed by the processing circuitry 502. The processing circuitry 502 may serve as a controller or control system for the computer system 500 that is to implement the functionality described herein.

The computer system 500 may include an input device interface 522 configured to receive input and selections to be communicated to the computer system 500 when executing instructions, such as from a keyboard, mouse, touch-sensitive surface, etc. Such input devices may be connected to the processing circuitry 502 through the input device
interface 522 coupled to the system bus 506 but can be connected through other interfaces, such as a parallel port, an Institute of Electrical and Electronic Engineers (IEEE) 1394 serial port, a Universal Serial Bus (USB) port, an IR interface, and the like. The computer system 500 may include an output device interface 524 configured to forward output, such as to a display, a video display unit (e.g., a liquid crystal display (LCD) or a cathode ray tube (CRT)). The computer system 500 may include a communications interface 526 suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

Example 1: A control unit 121 for determining the number of trailers towed by a tractor unit 100 in a tractor-trailer arrangement 200, wherein each trailer 101A, 101B, 101C in the tractor-trailer arrangement 200 comprises reference electrical loads that are controlled by the control unit 121 and powered by a power supply 110 in the tractor unit 100, and where the control unit 121 is configured to: activate one or more reference electrical loads in each trailer 101A, 101B, 101C, whereby the one or more activated reference electrical loads in each trailer have a known expected power consumption, contributing to a total expected power consumption that scales proportionally with the number of trailers; obtain power consumption data pertaining to the one or more reference electrical loads; and determine the number of trailers by analyzing the obtained power consumption data against the known expected power consumption of a single trailer.

Example 2: The control unit 121 of claim 1, wherein the one or more reference electrical loads activated in each trailer comprise any combination of indicator lights, fog lights, position lights, brake lights, and/or reversing lights.

Example 3: The control unit 121 of any of claims 1-2, wherein the obtained power consumption data comprise power consumption measurements obtained over a period of time.

Example 4: The control unit 121 of any of claims 1-3, wherein activating one or more reference electrical loads in each trailer 101A, 101B, 101C comprises activating and deactivating according to a known pattern or frequency, thereby enabling removal of power consumption from unrelated electrical loads in the obtained power consumption data.

Example 5: The control unit 121 of any of claim 1-4, wherein analyzing the obtained power consumption data against the known expected power consumption of a single trailer comprises applying a machine learning model that has been trained on detecting trailers from a dataset of labelled power consumption data, wherein the labels comprise number of trailers and information on activated reference electrical loads and their expected power consumption.

Example 6: The control unit 121 of any of claims 1-5, wherein the one or more reference electrical load is an ABS ECU having a known expected power consumption, and wherein the control unit is configured to determine the number of trailers equipped with an ABS ECU.

Example 7: The control unit 121 of any of claim 1-6, wherein the control unit 121 is further configured to adjust braking system controller 123 based on the determined number of trailers, such that a braking controller duty cycle is adjusted to account for the number of trailers.

Example 8: The control unit 121 of any of claims 1-7, wherein the control unit 121 is further configured to select an operational design domain based on the determined number of trailers.

Example 9: The control unit 121 of any of claims 1-9, wherein the power consumption data are obtained from voltage readings taken by a voltage sensor 122A and current readings taken by a current sensor 122B.

Example 10: A tractor unit 100 for towing multiple trailers in a tractor-trailer arrangement 200, the tractor unit 100 comprising a power supply 110, a voltage sensor 122A configured to obtain voltage readings and a current sensor 122B configured to obtain current readings, and a control unit 121 according to any of claims 1-9

Example 11: A method for determining the number of trailers towed by a tractor unit 100 in a tractor-trailer combination 100, the method comprising: activating S1 one or more reference electrical loads in each trailer 101A, 101B, 101C, whereby the one or more activated reference electrical loads in each trailer have a known expected power consumption, contributing to a total expected power consumption that scales proportionally with the number of trailers; obtaining S2 power consumption data pertaining to the one or more reference electrical loads; and determining S3 the number of trailers by analyzing the obtained power consumption data against the known expected power consumption of a single trailer.

Example 12: The method of claim 11, wherein activating S1 one or more reference electrical loads comprises activating any combination of indicator lights, fog lights, position lights, brake lights, and/or reversing lights.

Example 13: The method of any of claims 11-12, wherein the obtained power consumption data comprise power consumption data obtained over a period of time.

Example 14: The method of any of claims 11-13, wherein activating S1 one or more reference electrical loads in each trailer 101A, 101B, 101C comprises activating and deactivating according to a known pattern or frequency, thereby enabling removal of power consumption from unrelated electrical loads in the obtained power consumption data.

Example 15: The method of claim 14, wherein determining S3 comprises applying a machine learning model that has been trained on detecting trailers from a dataset of labelled power consumption data, wherein the labels comprise number of trailers and information on activated reference electrical loads and their expected power consumption.

Example 16: The method of any of claims 11-15, wherein the one or more reference electrical load is an ABS ECU having a known expected power consumption and determining S3 comprises determining the number of trailers equipped with an ABS ECU.

Example 17: The method of any of claims 11-16, further comprising adjusting S4 a braking controller duty cycle based on the determined number of trailers.

Example 18: The method of any of claims 11-17, wherein the power consumption measurements are obtained from voltage readings taken by a voltage sensor 122A and current readings taken by a current sensor 122B

Example 19: A computer program 550 comprising program code means for performing the steps of any of claims 11-18 when said program is run on a computer or on processing circuitry 510 of a control unit 121.

Example 20: A computer readable medium 560 carrying a computer program 570 comprising program code means for performing the steps of any of claims 11-18 when said program product is run on a computer or on processing circuitry 510 of a control unit 121.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A control unit (121) for determining the number of trailers towed by a tractor unit (100) in a tractor-trailer arrangement (200), wherein each trailer (101A, 101B, 101C) in the tractor-trailer arrangement (200) comprises reference electrical loads that are controlled by the control unit (121) and powered by a power supply (110) in the tractor unit (100), and where the control unit (121) is configured to:
activate one or more reference electrical loads in each trailer (101A, 101B, 101C), whereby the one or more activated reference electrical loads in each trailer have a known expected power consumption, contributing to a total expected power consumption that scales proportionally with the number of trailers;
obtain power consumption data pertaining to the one or more reference electrical loads; and
determine the number of trailers by analyzing the obtained power consumption data against the known expected power consumption of a single trailer.

2. The control unit (121) of claim 1, wherein the one or more reference electrical loads activated in each trailer comprise any combination of indicator lights, fog lights, position lights, brake lights, and/or reversing lights.

3. The control unit (121) of any of claims 1-2, wherein the obtained power consumption data comprise power consumption measurements obtained over a period of time.

4. The control unit (121) of any of claims 1-3, wherein activating one or more reference electrical loads in each trailer (101A, 101B, 101C) comprises activating and deactivating according to a known pattern or frequency, thereby enabling removal of power consumption from unrelated electrical loads in the obtained power consumption data.

5. The control unit (121) of any of claim 1-4, wherein analyzing the obtained power consumption data against the known expected power consumption of a single trailer comprises applying a machine learning model that has been trained on detecting trailers from a dataset of labelled power consumption data, wherein the labels comprise number of trailers and information on activated reference electrical loads and their expected power consumption.

6. The control unit (121) of any of claims 1-5, wherein the one or more reference electrical load is an anti-lock braking system, ABS, electronic control unit, ECU, having a known expected power consumption, and wherein the control unit is configured to determine the number of trailers equipped with an ABS ECU.

7. The control unit (121) of any of claim 1-6, wherein the control unit (121) is further configured to adjust braking system controller (123) based on the determined number of trailers, such that a braking controller duty cycle is adjusted to account for the number of trailers.

8. A tractor unit (100) for towing multiple trailers in a tractor-trailer arrangement (200), the tractor unit (100) comprising a power supply (110) configured to power one or more reference electrical loads in the trailers, a voltage sensor (122A) configured to obtain voltage readings and a current sensor (122B) configured to obtain current readings, and a control unit (121) according to any of claims 1-7.

9. A method for determining the number of trailers towed by a tractor unit (100) in a tractor-trailer combination (200), the method comprising:
activating (S1) one or more reference electrical loads in each trailer (101A, 101B, 101C), whereby the one or more activated reference electrical loads in each trailer have a known expected power consumption, contributing to a total expected power consumption that scales proportionally with the number of trailers;
obtaining (S2) power consumption data pertaining to the one or more reference electrical loads; and
determining (S3) the number of trailers by analyzing the obtained power consumption data against the known expected power consumption of a single trailer.

10. The method of claim 9, wherein activating (S1) one or more reference electrical loads comprises activating any combination of indicator lights, fog lights, position lights, brake lights, and/or reversing lights.

11. The method of any of claims 9-10, wherein the obtained power consumption data comprise power consumption data obtained over a period of time.

12. The method of any of claims 9-11, wherein activating (S 1) one or more reference electrical loads in each trailer (101A, 101B, 101C) comprises activating and deactivating according to a known pattern or frequency, thereby enabling removal of power consumption from unrelated electrical loads in the obtained power consumption data.

13. The method of any of claims 9-12, wherein determining (S3) comprises applying a machine learning model that has been trained on detecting trailers from a dataset of labelled power consumption data, wherein the labels comprise number of trailers and information on activated reference electrical loads and their expected power consumption.

14. The method of any of claims 9-13, further comprising adjusting (S4) a braking controller duty cycle based on the determined number of trailers.

15. A computer readable medium (560) carrying a computer program (570) comprising program code means for performing the steps of any of claims 9-14 when said program product is run on a computer or on processing circuitry (510) of a control unit (121).
